# EUROPEAN PATENT SPECIFICATION

(11) **EP 0 498 942 B1**
(45) Date of publication and mention of the grant of the patent: **20.08.1997**
(21) Application number: 91119981.8
(22) Date of filing: 22.11.1991
(51) Int. Cl.: G03G 9/097, C01F 7/02

(54) **Hydrophobic alumina and developing powder for electrophotography comprising the same**
Hydrophobes Aluminiumoxid und dieses enthaltendes Entwicklerpulver für die Elektrophotographie
Alumine hydrophobe et poudre de développateur électrophotographique la contenant

(30) Priority: 15.02.1991 JP 42362/91
(43) Date of publication of application: 19.08.1992
(73) Proprietor: MITSUBISHI MATERIALS CORPORATION, Chiyoda-ku Tokyo (JP)
(72) Inventor: Nakamura, Akihiro Mitsubishi Materials Corporation, Omiya-shi, Saitama-ken (JP); Nishihara, Akira Mitsubishi Materials Corporation, Omiya-shi, Saitama-ken (JP); Yoshizumi, Motohiko Mitsubishi Materials Corp., Saitama-ken (JP)
(74) Representative: Strehl Schübel-Hopf Groening & Partner

(56) References cited:
- US-A- 4 828 954
- US-A- 4 973 540
- PATENT ABSTRACTS OF JAPAN vol. 8, no. 134 (C-230)21 June 1984 ( NIHON YUNIKAA K.K. ) 15 March 1984

## Description

The present invention is related to a hydrophobic alumina powders having surfaces treated with organosilicon compound to render them hydrophobic as disclosed in US-A-4 973 540. This document discloses a developer (toner) for electro photography which comprises hydrophobic alumina particles treated with a flourine-substituted silane compound and a hydrophobic agent including silanes and silazanes and the like.

JP-A-59-045 906 discloses inorganic metal oxide particles treated with a combination of a flourine-free silane compound as a conventional silane coupling agent and a specific organopolysiloxane of the formula: (SiO₂)ₐX₂(ₐ₊₁) where X is either O_{1/2}[(CH₃)₂SiO] 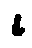 R¹ oder O_{1/2}R¹ and although not all the X's may be the same, at least one of X's is O_{1/2}[(CH₃)₂SiO] 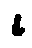 R¹, where R¹ is hydrogen or a hydrocarbonradial having up to 5 carbon atoms and 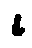 is 1 - 100, and a is 1 to 20.

### Prior Art

Electrophotography is a method for printing an image which comprises forming an electrostatic latent image on the surface of a photoconductive dielectric material by using an electromagnetic radiation such as light, developing the image by adhering developing powders comprising coloring minute particles (toner) and carrier particles to the latent image which forms an electrically charged area, and transferring and fixing the developing powders in the thus developed image onto a substrate such as paper. In order to improve the quality of printed images in electrophotography, it is required to improve the rheological properties of the toner contained in the developer and prevent agglomeration thereof. Rheological improver or flow properties improver is added in the toner for this purpose. Metal oxide particles, most typically silica particles, which have been subjected to a treatment for making the surface thereof hydrophobic are conventionally used as such a rheological improver. These additive particles, however, have a property of being electrified by the friction with iron, of which carrier particles are ordinarily made, and the thus generated charge is unstable as well as in a high level in its absolute value. Accordingly, when these additives are used in a large amount, electrification properties of the toner are significantly affected, which causes the amount of electric charge thereof to be more susceptible to the humidity and increases time variability thereof. Therefore, these additives can be normally used in no more than one weight part and the effect of the rheological improver is limited to an unsatisfactory level.

It is expected that the above-mentioned problems will be resolved by using as a rheological improver a material which is hardly electrified by the friction with iron. Alumina, which exhibits a very low-level electrification by the friction with iron, is suitable for this purpose. Ordinarily available alumina particles are, however, generally highly hydrophilic and deteriorate dispersibility and durability of the toner when used untreated. They have to be subjected to a surface treatment for providing hydrophobicity so as to be used as an additive to the toner. It is desired that the hydrophobicity surpasses 50% measured in the methanol titration test.

The most typical method for providing the hydrophilic surface of metal oxide and the like with hydrophobicity is to chemically or physically inactivate the hydroxyl groups existing on the surface of the oxide by treating with a silane coupling agent, a polysiloxane compound or the like. These conventional methods, however, cause the following problems when applied to alumina powders.

For example, when the alumina powders are treated with polysiloxane such as dimethylpolysiloxane, the alumina powders apparently exhibit negative electrification which is due to the frictional electrification of polysiloxane.

When the alumina powders are treated with a silane compound such as hexamethyldisilazane, the frictional electrification thereof is not significantly affected but the improvement in the hydrophobicity is unsatisfactory. The effect of hexamethyldisilazane in the hydrophobicity saturates before the hydrophobicity surpasses 30%, which is much lower than the level desired for toner additives. Such alumina powders will have a poor dispersibility in the toner.

Fluorine-substituted silane compounds are known to be useful as surface treatment agents which give high hydrophobicity. Japanese Laid-open Patent Publication No. 60-93455 describes a surface treatment of metal oxide using such a silane compound. It is actually possible to attain both of high hydrophobicity and low-level frictional electrification when alumina is treated with a fluorine-substituted silane compound. In the developer for electrophotography, however, a large amount of alumina powder having a large specific surface area is used and a large amount of expensive fluorine-substituted silane compounds are needed to provide the alumina powders with sufficient hydrophobicity and therefore the use of fluorine-substituted silane compounds is impractical in an economic respect.

Therefore, there is a need for hydrophobic alumina which exhibits a sufficiently high hydrophobicity and a low-level frictional electrification and can be produced with a practically acceptable cost. There is also a need for developing powders for electrophotography comprising such hydrophobic alumina as a rheological improver and having stable electrification properties and excellent rheological properties.

We conducted an intensive study to overcome the above-described problems and to provide such hydrophobic alumina and developing powders as desired, and found that alumina subjected to a surface treatment with the combinational use of a fluorine-substituted silane compound and an organopolysiloxane exhibited an improved hydrophobicity in comparison with those treated by either a fluorine-substituted silane compound alone or an organopolysiloxane alone and that the amount of fluorine-substituted silane compound needed to achieve the desired effect is significantly reduced. That is, according to the present invention, a practically acceptable amount of a fluorine-substituted silane compound suffices to control the electrification caused by the friction with iron and the hydrophobicity in a practically desired level. We also experimentally confirmed that the toner to which the thus treated alumina was added in a relatively large amount exhibited a very little change in the frictional electrification and exhibited good rheological properties as well.

### Disclosure of the Invention

The present invention provides an alumina powder treated with a fluorine-substituted silane compound and an organopolysiloxane and exhibiting an electrification caused by the friction with iron of from 0 µC/g to -40 µC/g and a hydrophobicity measured according to the methanol titration test of not less than 50% as claimed in claim 1.

The present invention also provides developing powders for electrophotography comprising the above-mentioned alumina in the toner.

The fluorine-substituted silane compounds useful in the present invention are represented by the following formula (I):

R¹-(X)ₚ-(CH₂CH₂O)_{q}(CH₂)ₘSiR² ₃₋ₙR³ ₙ

wherein R¹ is a fluorine-substituted alkyl group containing 1-10 carbon atoms; X is a bifunctional group selected from the group consisting of SO₂NR⁴, CONR⁴ (wherein R⁴ is hydrogen or an alkyl group containing 1-5 carbon atoms), CO₂ and CH₂O; R² is a alkyl group containing 1-5 carbon atoms; R³ is Cl, Br or an alkoxyl group containing 1-5 carbon atoms; p is an integer of 0 or 1; q is an integer of from 0 to 10; m is an integer of from 1 to 5 (m is an integer of from 2 to 5 when p and q are simultaneously 0); n is an integer of from 1 to 3. Examples of these compounds include:
C₆F₁₃CH₂CH₂Si(OCH₃)₃;
CF₃CH₂CH₂OCH₂CH₂CH₂Si(OCH₃)₃;
C₄F₉CH₂CH₂OCH₂CH₂SiCH₃(OC₂H₅)₂;
C₆F₁₃CH₂CH₂O(CH₂CH₂O)₂(CH₂)₃SiCH₃(OCH₃)₃;
C₇F₁₅CH₂O(CH₂)₃Si(OC₂H₅)₃;
C₇F₁₅CONEt(CH₂)₃Si(OCH₃)₃;
C₈F₁₇SO₂NEt(CH₂)₃Si(OCH₃)₃;
C₈F₁₇SO₂NPr(CH₂)₃Si(OCH₃)₃;
C₈F₁₇SO₂NEt(CH₂)₃SiCH₃Cl₂; and the like.
The organopolysiloxane usable in the present invention is a polysiloxane having a repeating unit represented by the formula [SiR⁵R⁶O] wherein R⁵ and R⁶ are the same or different and are hydrogen or an organic group selected from alkyl, phenyl, phenyl-substituted alkyl, and alkoxy one of which may be hydrogen. Examples of the combination of these substituents include methyl and hydrogen groups, phenyl and phenyl groups, methyl and methylstyryl groups, methyl and long-chained alkyl groups, methyl and long-chained alkoxy groups.

The molecular weight of the organopolysiloxane or the polymerization degree thereof is not limited on condition that the organopolysiloxane has rheological properties sufficient to uniformly cover and adhere the surface of the alumina particle. From this viewpoint, organopolysiloxane having a viscosity of about 10 mm²/s⁻¹ (10 cs) to about 1000 mm²/s⁻¹ (1000cs) is suitably used in the present invention.

The shape of the alumina powder is not limited. The powders may be in a shape and in a particle size suitable for the purpose for which they are used. When they are used as developer for electrophotography, powders having a specific surface area of not less than 50m²/g and not more than 200m²/g and generally in a uniform spherical shape are preferred.

In the present invention, the electrification caused by the friction with iron of the treated alumina is in a range of 0µC/g to -40µC/g. When the frictional electrification surpasses 40µC/g in the absolute value, electrification properties of the toner, especially their dependency on temperature and time variability are significantly affected.

The hydrophobicity of the alumina powders treated according to the present invention must be not less than 50 estimated by the methanol titration test. This test method is for experimentally determining the hydrophobicity of alumina powders and is defined as follows: 0.2g of treated alumina powders is added to 50ml of water in a beaker. The mixture is stirred with a magnetic stirrer and methanol is dropped thereto. The end point is defined as the point when the alumina in the mass is wetted in the solution. The hydrophobicity of the alumina is calculated from the volume of methanol (Qml) added until the above-defined end point using the following formula:

Hydrophobicity (%) = Q/(50+Q) X 100 .

Alumina powder exhibiting higher hydrophobicity in this test is more compatible with the toner and therefore more useful as an additive to the toner. Practically the value is desired to be not less than 50%.

In the processing of alumina powders, conventional processes can be applied. Preferably it is carried out as follows: Fluorine-substituted silane compound is added to alumina powders while the latter is being mechanically stirred well. Organopolysiloxane is dropped or sprayed thereto simultaneously with or following the addition of the fluorine-substituted silane compound. Catalytic compounds such as diethylamine may be added here in order to enhance the reactivity of the fluorine-substituted silane compound. Ammonia gas may be blown into the mixture for the same purpose. Solvents such as ethanol, acetone, hexane and the like can be used as a diluting solvent depending on the viscosity of the organopolysiloxane and the fluorine-substituted silane compound used. After the addition of the treating agents is completed, the reaction mixture is heated to 100-300^{o}C under a nitrogen atmosphere to complete the reaction and to remove the solvents.

The hydrophobic alumina of the present invention is characterized in that the electrification charge generated by the friction with iron is in a range of from 0µC/g to -40µC/g and that the hydrophobicity determined by the methanol titration test in a range of not less than 50%. Alumina powder defined as above are produced by adjusting the amount of organopolysiloxane and fluorine-substituted silane compounds depending on the specific surface area of the alumina powder to be treated.

For example, for the alumina powder having a specific surface area of 100²m/g, the above-mentioned condition of the hydrophobicity can be satisfied by using organopolysiloxane and fluorine-substituted silane compounds in total weight of 2.5-12.0 wt%, preferably 2.5-5.0wt%, based on the weight of the alumina powder to be treated. The total weight of organopolysiloxane and fluorine-substituted silane compounds will be increased or decreased in accordance as the specific surface area of the alumina used varies. The amount of the fluorine-substituted silane compound is limited to 1.0-10.0 % by weight based on the weight of the alumina to be treated. with the addition of less than 1.0wt%, the effect thereof is not satisfactory while the addition of more than 10.0wt% is impracticable from the economic viewpoint. The preferred range is 1.0-5.0wt%. The amount of the organopolysiloxane is limited to 1.0-5.0 % by weight based on the weight of the alumina to be treated. With the addition of less than 1.0wt%, the effect thereof is not satisfactory while the addition of more than 5.0wt% makes it impossible to satisfy the condition of the frictional electrification. The preferred range is 1.0-2.5wt%.

The combinational use of organopolysiloxane and fluorine-substituted silane compound is essential to the present invention. If one of the two lacks in the treatment of alumina, hydrophobicity in a desired level cannot be achieved. The mechanism of the synergistic effect of organopolysiloxane and fluorine-substituted silane compounds on the hydrophobicity is not clear. One hypothesis for explaining the phenomena is that the presence of the organopolysiloxane nearby the alumina surface to which fluorine-substituted silane compounds are bonded enhances the orientation of the latter.

The developing powder according to the present invention can be obtained by treating the alumina powder with organopolysiloxane and fluorine-substituted silane compound in the above-described manner and adding the thus treated alumina powder to the toner in a conventional manner.

The present invention will be made more apparent by the following demonstrative examples. It should be noted, however, that the following example are to illustrate the invention more clearly and not to limit the scope of the invention in any sense.

In the following examples, the frictional electrification was determined by the blow-off method using Faraday cage. This test method is described, for example, in "Shikizai", 55[9] 630-636(1982).

### Example 1

Twenty grams of alumina having a specific surface area of 100m²/g were dried by heating and placed in a stainless container. As the alumina powders were stirred under a nitrogen atmosphere, a treating composition #1 consisting of 0.50g of C₈F₁₇SO₂NPr(CH₂)₃Si(OCH₃)₃ (fluorine-substituted silane compound), 0.25g of dimethylpolysiloxane (KF-96 (50cs) supplied from Shin'etsu Kagaku Kabushiki Kaisha), a couple of drops of diethylamine, 5.0ml of n-hexane was sprayed in the container at room temperature.

After the spraying of the composition was completed, the alumina powders were stirred for further 30 minutes at room temperature, externally heated to 250^{o}C for 40 minutes under a nitrogen flow, kept at the temperature for 30 minutes and then allowed to be cooled to the room temperature. Properties of the thus obtained alumina were tested. The hydrophobicity measured in the methanol titration method was 61 and the electrification by the friction with iron was -17µC/g.

### Example 2

Twenty grams of alumina having a specific surface area of 100m²/g were dried by heating and placed in a stainless container. As the alumina powders were stirred under a nitrogen atmosphere, a treating composition #2a consisting of 0.50g of C₈F₁₇SO₂NPr(CH₂)₃Si(OCH₃)₃ (fluorine-substituted silane compound), a couple of drops of diethylamine and 3.0ml of n-hexane and subsequently a treating composition #2b consisting of 0.25g of methylhydrogenpolysiloxane (KF-99 (20cs) supplied from Shin'etsu Kagaku Kabushiki Kaisha) and 2.0ml of n-hexane were respectively sprayed in the container at room temperature.

After the spraying of the composition was completed, the alumina powders were stirred for further 30 minutes at room temperature, externally heated to 230^{o}C for 40 minutes under a nitrogen flow, kept at the temperature for 30 minutes and then allowed to be cooled to the room temperature. Properties of the thus obtained alumina were tested. The hydrophobicity measured in the methanol titration method was 59 and the electrification by the friction with iron was -8µC/g.

### Example 3

Twenty grams of alumina having a specific surface area of 100m²/g were dried by heating and placed in a stainless container. As the alumina powders were stirred under a nitrogen atmosphere, a treating composition #3 consisting of 0.50g of C₆F₁₃CH₂CH₂Si(OCH₃)₃ (fluorine-substituted silane compound), 0.25g of diphenylpolysiloxane (KF-55 (100cs) supplied from Shin'etsu Kagaku Kabushiki Kaisha), a couple of drops of diethylamine, 5.Oml of n-hexane was sprayed in the container at room temperature.

After the spraying of the composition was completed, the alumina powders were stirred for further 30 minutes at room temperature, externally heated to 230°C for 40 minutes under a nitrogen flow, kept at the temperature for 30 minutes and then allowed to be cooled to the room temperature. Properties of the thus obtained alumina were tested. The hydrophobicity measured in the methanol titration method was 54 and the electrification by the friction with iron was -38µC/g.

### Example 4

Twenty grams of alumina having a specific surface area of 100m²/g were dried by heating and placed in a stainless container. As the alumina powders were stirred under a nitrogen atmosphere, a treating composition #4 consisting of 1.00g of C₇F₁₅CH₂O(CH₂)₃Si(OC₂H₅)₃ (fluorine-substituted silane compound), 0.25g of methylalkylpolysiloxane (KF-413 (100cs) supplied from Shin'etsu Kagaku Kabushiki Kaisha), a couple of drops of diethylamine, 5.0ml of acetone was sprayed in the container at room temperature.

After the spraying of the composition was completed, the alumina powders were stirred for further 30 minutes at room temperature, externally heated to 200°C for 40 minutes under a nitrogen flow, kept at the temperature for 30 minutes and then allowed to be cooled to the room temperature. Properties of the thus obtained alumina were tested. The hydrophobicity measured in the methanol titration method was 74 and the electrification by the friction with iron was -22µC/g.

### Example 5

Twenty grams of alumina having a specific surface area of 100m²/g were dried by heating and placed in a stainless container. As the alumina powders were stirred under a nitrogen atmosphere, a treating composition #5 consisting of 2.00g of C₄F₉CH₂O(CH₂)₃SiCH₃(OC₂H₅)₂
(fluorine-substituted silane compound), 0.25g of methylalkoxypolysiloxane (KF-851 (80cs) supplied from Shin'etsu Kagaku Kabushiki Kaisha), a couple of drops of diethylamine, 5.0ml of n-hexane was sprayed in the container at room temperature.

After the spraying of the composition was completed, the alumina powders were stirred for further 30 minutes at room temperature, externally heated to 250°C for 40 minutes under a nitrogen flow, kept at the temperature for 30 minutes and then allowed to be cooled to the room temperature. Properties of the thus obtained alumina were tested. The hydrophobicity measured in the methanol titration method was 58 and the electrification by the friction with iron was -15µC/g.

### Example 6

Twenty grams of alumina having a specific surface area of 100m²/g were dried by heating and placed in a stainless container. As the alumina powders were stirred under a nitrogen atmosphere, a treating composition #6 consisting of 0.50g of C₈F₁₇SO₂NEt(CH₂)₃SiCH₃Cl₂
(fluorine-substituted silane compound), 0.25g of methylhydrogenpolysiloxane (KF-99 (20cs) supplied from Shin'etsu Kagaku Kabushiki Kaisha), a couple of drops of diethylamine, 5.0ml of n-hexane was sprayed in the container at room temperature.

After the spraying of the composition was completed, the alumina powders were stirred for further 30 minutes at room temperature, externally heated to 250^{o}C for 40 minutes under a nitrogen flow, kept at the temperature for 30 minutes and then allowed to be cooled to the room temperature. Properties of the thus obtained alumina were tested. The hydrophobicity measured in the methanol titration method was 74 and the electrification by the friction with iron was -22µC/g.

### Example 7

Twenty grams of alumina having a specific surface area of 100m²/g were dried by heating and placed in a stainless container. As the alumina powders were stirred under a nitrogen atmosphere, a treating composition #7 consisting of 1.00g of C₈F₁₇SO₂NPr(CH₂)₃Si(OCH₃)₃
(fluorine-substituted silane compound), 0.25g of methylstyrylpolysiloxane (KF-410 (1000cs) supplied from Shin'etsu Kagaku Kabushiki Kaisha), a couple of drops of diethylamine, 5.0ml of acetone was sprayed in the container at room temperature.

After the spraying of the composition was completed, the alumina powders were stirred for further 30 minutes at room temperature, externally heated to 250°C tor 40 minutes under a nitrogen flow, kept at the temperature for 30 minutes and then allowed to be cooled to the room temperature. Properties of the thus obtained alumina were tested. The hydrophobicity measured in the methanol titration method was 58 and the electrification by the friction with iron was -38µC/g.

### Example 8

Twenty grams of alumina having a specific surface area of 100m²/g were dried by heating and placed in a stainless container. As the alumina powders were stirred under a nitrogen atmosphere, a treating composition #8 consisting of 1.00g of C₇F₁₅CO₂NEt(CH₂)₃Si(OCH₃)₃
(fluorine-substituted silane compound), 0.25g of dimethylpolysiloxane (KF-96 (50cs) supplied from Shin'etsu Kagaku Kabushiki Kaisha), a couple of drops of diethylamine, 5.0ml of acetone was sprayed in the container at room temperature.

After the spraying of the composition was completed, the alumina powders were stirred for further 30 minutes at room temperature, externally heated to 200°C for 40 minutes under a nitrogen flow, kept at the temperature for 30 minutes and then allowed to be cooled to the room temperature. Properties of the thus obtained alumina were tested. The hydrophobicity measured in the methanol titration method was 68 and the electrification by the friction with iron was -21µC/g.

### Comparative Example 1

A treatment of alumina powders was effected in the same manner as the process of Example 1 except that no organopolysiloxane was used.

Twenty grams of alumina having a specific surface area of 100m²/g were dried by heating and placed in a stainless container. As the alumina powders were stirred under a nitrogen atmosphere, a treating composition consisting of 0.50g of C₈F₁₇SO₂NPr(CH₂)₃Si(OCH₃)₃
(fluorine-substituted silane compound), a couple of drops of diethylamine and 5.0ml of n-hexane was sprayed in the container at room temperature.

After the spraying of the composition was completed, the alumina powders were stirred for further 30 minutes at room temperature, externally heated to 250°C for 40 minutes under a nitrogen flow, kept at the temperature for 30 minutes and then allowed to be cooled to the room temperature. Properties of the thus obtained alumina were tested. The hydrophobicity measured in the methanol titration method was 15 and the electrification by the friction with iron was -8µC/g.

In order to enhance the hydrophobicity, the quantity of the fluorine-substituted silane compound in the treating composition was varied. It was found that at least 1.6g of the compound was needed to achieve the hydrophobicity of not less than 50.

### Comparative Example 2

A treatment of alumina powders was effected in the same manner as the process of Example 1 except that no fluorine-substituted silane compound was used.

Twenty grams of alumina having a specific surface area of 100m²/g were dried by heating and placed in a stainless container. As the alumina powders were stirred under a nitrogen atmosphere, a treating composition consisting of 0.50g of methylhydrogenpolysiloxane and 5.0ml of n-hexane was sprayed in the container at room temperature.

After the spraying of the composition was completed, the alumina powders were stirred for further 30 minutes at room temperature, externally heated to 250°C for 40 minutes under a nitrogen flow, kept at the temperature for 30 minutes and then allowed to be cooled to the room temperature. Properties of the thus obtained alumina were tested. The hydrophobicity measured in the methanol titration method was 26 and the electrification by the friction with iron was -68µC/g.

In order to enhance the hydrophobicity, the quantity of the organopolysiloxane in the treating composition was varied to 1.0g and 3.0g. The results (hydrophobicity and frictional electrification) were 27 ; -65µC/g and 56 ; -185µC/g respectively.

### Example 9

In this example, the treating composition consisting of fluorine-substituted compound and organopolysiloxane was used in the same weight (total weight: 0.50g) as in the above-described comparative examples to illustrate the synergistic effect of the two agents.

Twenty grams of alumina having a specific surface area of 100m²/g were dried by heating and placed in a stainless container. As the alumina powders were stirred under a nitrogen atmosphere, a treating composition consisting of 0.25g of C₈F₁₇SO₂NPr(CH₂)₃Si(OCH₃)₃
(fluorine-substituted silane compound), 0.25g of methylhydrogenpolysiloxane (KF-99 (20cs) supplied from Shin'etsu Kagaku Kabushiki Kaisha), a couple of drops of diethylamine, 5.0ml of n-hexane was sprayed in the container at room temperature.

After the spraying of the composition was completed, the alumina powders were stirred for further 30 minutes at room temperature, externally heated to 250^{o}C for 40 minutes under a nitrogen flow, kept at the temperature for 30 minutes and then allowed to be cooled to the room temperature. Properties of the thus obtained alumina were tested. The hydrophobicity measured in the methanol titration method was 72 and the electrification by the friction with iron was -32µC/g.

As is apparent from the results of this example and those of comparative examples 1 and 2, the quantity of the fluorine∼substituted silane compound necessary to achieve the desired hydrophobicity can be reduced to 10∼20% of that needed in the single use of the silane compound.

### Example 10

18% of carbon was dispersed in styrene-acrylic resin. The resin was then pulverized and classified to give a 10∼20µm resin powder. One gram of the alumina powders obtained by the process of the above-described examples 1 was mixed with 100g of this resin powder to prepare a toner. A developing powder was prepared by admixing 30g of the toner and 1000g of iron oxide powder. This developing powder exhibited a frictional electrification of -15µC/g, which was the same as the electrification of a developer prepared without the alumina powders.

A life test was effected by using the thus obtained developing powder in a standard copying machine. No fogging of the image was observed after the copying was repeated over 35,000 times. The developer exhibited a satisfactory performance in a hot and humid condition (28^{o}C, 85%RH).

### Example 11

Another developer was prepared by the same manner as Example 10 except that the amount of the alumna powder was changed to 2g. The frictional electrification of the developer was -16µC/g.

A life test was effected by using the developer in a standard copying machine. No fogging of the image was observed after the copying was repeated over 40,000 times. The developer exhibited a satisfactory performance in a hot and humid condition (28^{o}C, 85%RH).

### Example 12

A styrene-acrylic resin in which 18% of carbon were dispersed was pulverized and classified. 100g of the classified particles having a particle size of 10-20µm and 0.5g of the alumina powder obtained by the process of Example 2 were mixed to give a toner powder. 1000g of iron oxide powder was added to 30g of the thus obtained toner to form a developer. The frictional electrification of the developer was -16µC/g.

A life test was effected by using the developer in a standard copying machine. No fogging of the image was observed after the copying was repeated over 30,000 times. The developer exhibited a satisfactory performance in a hot and humid condition (28^{o}C, 85%RH).

### Example 13

Another developer was prepared by the same manner as Example 12 except that the amount of the alumina powder was changed to 1g. The frictional electrification of the developer was -16µC/g.

A life test was effected by using the developer in a standard copying machine. No fogging of the image was observed after the copying was repeated over 38,000 times. The developer exhibited a satisfactory performance in a hot and humid condition (28^{o}C, 85%RH).

### Example 14

A styrene-acrylic resin in which 18% of carbon were dispersed was pulverized and classified. 100g of the classified particles having a particle size of 10-20µm and 0.5g of the alumina powder obtained by the process of Example 3 were mixed to give a toner powder. 1000g of iron oxide powder was added to 30g of the thus obtained toner to form a developer. The frictional electrification of the developer was -16µC/g.

A life test was effected by using the developer in a standard copying machine. No fogging of the image was observed after the copying was repeated over 27,000 times. The developer exhibited a satisfactory performance in a hot and humid condition (28^{o}C, 85%RH).

### Example 15

A styrene-acrylic resin in which 18% of carbon were dispersed was pulverized and classified. 100g of the classified particles having a particle size of 10-20µm and 0.5g of the alumina powder obtained by the process of Example 4 were mixed to give a toner powder. 1000g of iron oxide powder was added to 30g of the thus obtained toner to form a developer. The frictional electrification of the developer was -16µC/g.

A life test was effected by using the developer in a standard copying machine. No fogging of the image was observed after the copying was repeated over 40,000 times. The developer exhibited a satisfactory performance in a hot and humid condition (28^{o}C, 85%RH).

### Example 16

A styrene-acrylic resin in which 18% of carbon were dispersed was pulverized and classified. 100g of the classified particles having a particle size of 10-20µm and 0.5g of the alumina powder obtained by the process of Example 5 were mixed to give a toner powder. 1000g of iron oxide powder was added to 30g of the thus obtained toner to form a developer. The frictional electrification of the developer was -16µC/g.

A life test was effected by using the developer in a standard copying machine. No fogging of the image was observed after the copying was repeated over 40,000 times. The developer exhibited a satisfactory performance in a hot and humid condition (28^{o}C, 85%RH).

### Example 17

A styrene-acrylic resin in which 18% of carbon were dispersed was pulverized and classified. 100g of the classified particles having a particle size of 10-20µm and 0.5g of the alumina powder obtained by the process of Example 8 were mixed to give a toner powder. 1000g of iron oxide powder was added to 30g of the thus obtained toner to form a developer. The frictional electrification of the developer was -16µC/g.

A life test was effected by using the developer in a standard copying machine. No fogging of the image was observed after the copying was repeated over 35,000 times. The developer exhibited a satisfactory performance in a hot and humid condition (28^{o}C, 85%RH).

### Example 18

Another developer was prepared by the same manner as Example 17 except that the amount of the alumina powder was changed to 1g. The frictional electrification of the developer was -16µC/g.

A life test was effected by using the developer in a standard copying machine. No fogging of the image was observed after the copying was repeated over 40,000 times. The developer exhibited a satisfactory performance in a hot and humid condition (28°C, 85%RH).

### Comparative Example 3

A styrene-acrylic resin in which 18% of carbon were dispersed was pulverized and classified. 100g of the classified particles having a particle size of 10-20µm and 0.5g of the alumina powder obtained by the process of Comparative Example 1 were mixed to give a toner powder. 1000g of iron oxide powder was added to 30g of the thus obtained toner to furm a developer. The frictional electrification of the developer was -15µC/g.

A life test was effected by using the developer in a standard copying machine. Fogging of the image was observed after the copying was repeated over 18,000 times. The frictional electrification decreased to -13µC/g in a hot and humid condition (28°C, 85%RH).

### Comparative Example 4

A styrene-acrylic resin in which 18% of carbon were dispersed was pulverized and classified. 100g of the classified particles having a particle size of 10-20µm and 0.5g of the alumina powder obtained by the process of Comparative Example 2 were mixed to give a toner powder. 1000g of iron oxide powder was added to 30g of the thus obtained toner to form a developer. The frictional electrification of the developer was -15µC/g.

A life test was effected by using the developer in a standard copying machine. Fogging of the image was observed after the copying was repeated over 21,000 times. The frictional electrification decreased to -12µC/g in a hot and humid condition (28°C, 85%RH).

## Claims

1. Hydrophobic alumina powders having surfaces treated with an organosilicon compound to render them hydrophobic, **characterized in that** the organosilicon compound is a combination of (a) a fluorine-substituted silane compound represented by the following formula (I):
R¹-(X)ₚ-(CH₂CH₂O)_{q}(CH₂)ₘSiR² ₃₋ₙR³ ₙ
wherein R¹ is a fluorine-substituted alkyl group containing 1-10 carbon atoms; X is a bifunctional group selected from the group consisting of SO₂NR⁴, CONR⁴ (wherein R⁴ is hydrogen or an alkyl group containing 1-5 carbon atoms), CO₂ and CH₂O; R² is an alkyl group containing 1-5 carbon atoms; R³ is Cl, Br or an alkoxyl group containing 1-5 carbon atoms; p is an integer of 0 or 1; q is an integer of from 0 to 10; m is an integer of from 1 to 5; (m is an integer of from 2 to 5 when p and q are simultaneously 0); and n is an integer of from 1 to 3, and (b) an organopolysiloxane comprising a repeating unit represented by the formula [SiR⁵R⁶O] wherein R⁵ and R⁶ may be the same or different and are hydrogen or an organic group selected from alkyl, phenyl, phenyl-substituted alkyl, and alkoxy, with the proviso that R⁵ and R⁶ are not both hydrogen, and that the surface-treated alumina powders exhibit an electrification caused by the friction with iron of from 0 µC/g to -40 µC/g and a hydrophobicity measured according to the methanol titration test of not less than 50%.

2. Hydrophobic alumina powders of Claim 1 wherein the alumina powders have a specific surface area of 50-200 m²/g.

3. Developing powders for electrophotography comprising a toner which contains alumina powders as a flow properties improver, characterized in that the alumina powders are hydrophobic alumina powders according to Claim 1 or 2.

## Patentansprüche

1. Hydrophobes Aluminiumoxidpulver, dessen Oberfläche durch Behandlung mit einer Organosilicium-Verbindung hydrophob ausgerüstet ist, dadurch gekennzeichnet, daß es sich bei der Organosilicium-Verbindung um eine Kombination aus (a) einer fluorsubstituierten Silan-Verbindung, die durch die folgende Formel (I) wiedergegeben ist:
R¹-(X)ₚ-(CH₂CH₂O)_{q}(CH₂)ₘSiR² ₃₋ₙR³ ₙ,
worin R¹ eine fluorsubstituierte Alkylgruppe mit 1-10 Kohlenstoffatomen bedeutet; x eine bifunktionelle Gruppe bedeutet, die ausgewählt ist unter SO₂NR⁴, CONR⁴ (worin R⁴ Wasserstoff oder eine Alkylgruppe mit 1-5 Kohlenstoffatomen bedeutet), CO₂ und CH₂O; R² eine Alkylgruppe mit 1-5 Kohlenstoffatomen bedeutet; R³ Cl, Br oder eine Alkoxylgruppe mit 1-5 Kohlenstoffatomen bedeutet; p eine ganze Zahl mit einem Wert von 0 oder 1 ist; q eine ganze Zahl mit einem Wert von 0 bis 10 ist; m eine ganze Zahl von 1 bis 5 ist (m ist eine ganze Zahl von 2 bis 5, wenn p und q gleichzeitig den Wert 0 haben); und n eine ganze Zahl mit einem Wert von 1 bis 3 ist, und aus (b) einem Polysiloxan mit einer Struktureinheit der Formel [SiR⁵R⁶O] handelt, worin R⁵ und R⁶ gleich oder verschieden sind und Wasserstoff oder eine organische Gruppe, die unter Alkyl, Phenyl, phenylsubstituiertem Alkyl und Alkoxy ausgewählt ist, bedeuten, mit der Maßgabe, daß R⁵ und R⁶ nicht gleichzeitig Wasserstoff bedeuten, und daß das oberflächenbehandelte Aluminiumoxidpulver eine durch Reibung mit Eisen hervorgerufene Aufladung im Bereich von 0 µC/g bis -40 µC/g und eine hydrophobe Beschaffenheit bei Messung mit dem Methanol-Titrationstest von nicht weniger als 50% aufweist.

2. Hydrophobes Aluminiumoxidpulver nach Anspruch 1, wobei das Aluminiumoxidpulver eine spezifische Oberfläche von 50-200 m²/g aufweist.

3. Entwicklerpulver für elektrophotographische Zwecke, umfassend einen Toner, der ein Aluminiumoxidpulver als Mittel zur Verbesserung der Fließeigenschaften enthält, dadurch gekennzeichnet, daß es sich beim Aluminiumoxidpulver um ein hydrophobes Aluminiumoxidpulver nach Anspruch 1 oder 2 handelt.

## Revendications

1. Poudres d'alumine hydrophobes à surfaces traitées par un composé organosilicié à l'effet de les rendre hydrophobes, caractérisées en ce que le composé organosilicié est une combinaison :
(a) d'un composé silane fluoré représenté par la formule suivante (I) :
R¹- (X)_{P}- (CH₂CH₂O)_{q} (CH₂)ᵣSiR²₃₋ₙR³ₙ
où R¹ est un groupe alkyle fluoré comptant 1 à 10 atomes de carbone ; X est un groupe bifonctionnel choisi dans l'ensemble formé par les radicaux SO₂NR⁴, CONR⁴ (où R⁴ est un atome d'hydrogène ou un groupe alkyle comptant 1 à 5 atomes de carbone), CO₂ et CH₂O ; R² est un groupe alkyle comptant 1 à 5 atomes de carbone ; R³ est Cl, Br ou un groupe alcoxy comptant 1 à 5 atomes de carbone ; p est un nombre entier valant 0 ou 1; q est un nombre entier valant 0 à 10 ; m est un nombre entier valant 1 à 5 sauf si p et q sont simultanément nuls, auquel cas m vaut 2 à 5 ; et n est un nombre entier valant 1 à 3, et
(b) d'un organopolysiloxane comprenant un motif répétitif représenté par la formule [SiR⁵R⁶O] dans laquelle R⁵ et R⁶ peuvent être identiques ou différents et sont un atome d'hydrogène ou un groupe organique choisi parmi les groupes alkyles, phényle, alkyles phénylés et alcoxy, étant entendu que R⁵ et R⁶ ne sont pas tous deux des atomes d'hydrogène,
et en ce que les poudres d'alumine à surfaces traitées présentent une électrisation causée par la friction avec du fer de 0 à -40 µC/g et une hydrophobie, mesurée par la méthode d'essai, non inférieure à 50 %.

2. Poudres d'alumine hydrophobes de la revendication 1 où les poudres d'alumine ont une surface spécifique de 50 à 200 m²/g.

3. Poudres de développement pour électrophotographie comprenant une encre en poudre (toner) qui contient des poudres d'alumine en tant qu'agent d'amélioration des propriétés d'écoulement, caractérisées en ce que les poudres d'alumine sont des poudres d'alumine hydrophobes selon la revendication 1 ou 2.
